# EUROPÄISCHE PATENTSCHRIFT

(11) **EP 1 572 477 B1**
(45) Veröffentlichungstag und Bekanntmachung des Hinweises auf die Patenterteilung: **28.06.2006**
(21) Anmeldenummer: 03767613.7
(22) Anmeldetag: 22.11.2003
(51) Int. Cl.: B60H 1/00

(54) **VERFAHREN ZUM BETREIBEN EINER KLIMAANLAGE**
METHOD FOR OPERATING AN AIR CONDITIONING SYSTEM
PROCEDE POUR FAIRE FONCTIONNER UNE INSTALLATION DE CLIMATISATION

(30) Priorität: 19.12.2002 DE 10259973
(43) Veröffentlichungstag der Anmeldung: 14.09.2005
(73) Patentinhaber: DaimlerChrysler AG, 70567 Stuttgart (DE)
(72) Erfinder: BADENHORST, Sean, Dulwich Hill, NSW 2203 (AU); JECKEL, Alfred, 72108 Rottenburg (DE); JOHNER, Berthold, 72108 Rottenburg (DE)
(86) Internationale Anmeldenummer: PCT/EP2003/013136
(87) Internationale Veröffentlichungsnummer: WO 2004/056593

(56) Entgegenhaltungen:
- EP-A- 1 155 886
- WO-A-00/59748
- DE-C- 19 847 504
- US-A- 5 876 277
- US-B1- 6 494 777
- PATENT ABSTRACTS OF JAPAN Bd. 0082, Nr. 27 (M-332), 18. Oktober 1984 (1984-10-18) & JP 59 109413 A (NIPPON DENSO KK), 25. Juni 1984 (1984-06-25)
- PATENT ABSTRACTS OF JAPAN Bd. 1997, Nr. 10, 31. Oktober 1997 (1997-10-31) & JP 9 152238 A (SANYO ELECTRIC CO LTD), 10. Juni 1997 (1997-06-10)

## Beschreibung

Die Erfindung betrifft ein Verfahren zum Betreiben einer Klimaanlage in einem Innenraum eines Kraftfahrzeugs nach der im Oberbegriff von Anspruch 1 näher definierten Art. Des Weiteren betrifft die Erfindung eine Klimaanlage für ein Kraftfahrzeug gemäß dem Oberbegriff von Anspruch 5.

Gattungsgemäße Verfahren zum Betreiben von Klimaanlagen sind aus dem allgemeinen Stand der Technik bekannt. Im Normalzustand wird die Klimaanlage dabei im Umluftbetrieb betrieben, so dass dem Innenraum des Kraftfahrzeugs lediglich umgewälzte Innenluft und keine Frischluft zugeführt wird. Dies hat insbesondere bei hohen Außentemperaturen, also im Kühlbetrieb der Klimaanlage, den Vorteil, dass die Luft weniger stark abgekühlt werden muss und die Klimaanlage somit weniger Energie in Form von Kraftstoff verbraucht. Um den Insassen dennoch Frischluft zuzuführen, wird die Klimaanlage in bestimmten zeitlichen Abständen in den Frischluftbetrieb umgeschaltet. Eine solche Zeitsteuerung nimmt allerdings keine Rücksicht auf die tatsächlichen Verhältnisse im Innenraum des Kraftfahrzeugs, also beispielsweise wie viele Personen sich in demselben befinden und wie die Luftqualität in demselben ist.

Die US 6,494,777 B1 zeigt ein Verfahren zum Betreiben einer Klimaanlage in einem Innenraum eines Kraftfahrzeuges, mit dem die Klimaanlage im Umluftbetrieb, in dem dem Innenraum umgewälzte Innenluft zugeführt wird, oder im Frischluftbetrieb, in dem dem Innenraum zumindest ein Anteil an Frischluft zugeführt wird, betrieben werden kann. Im Normalzustand wird die Klimaanlage im Umluftbetrieb betrieben, wobei jedoch bei Überschreiten eines bestimmten, in dem Innenraum des Kraftfahrzeuges von einem Sensor gemessenen CO₂-Grenzwertes in den Frischluftbetrieb umgeschaltet wird.

Weiterhin ist aus der JP-59 109 413 bekannt, dass bei einem Gebrauch eines kraftfahrzeugeigenen Zigarettenanzünders oder Aschenbechers die Klimaanlage des Kraftfahrzeuges in Gang gesetzt wird, so dass von dieser ein Luftstrom erzeugt wird, der die Rauchpartikel zu einem Detektor führt. Dieser Detektor steuert dann eine Luftreinigungsvorrichtung an.

Aus der DE 197 50 133 C2 ist eine Vorrichtung für die Überwachung und Regelung der CO₂-Konzentration im Innenraum eines Kraftfahrzeugs bekannt. Hierbei wird auf verhältnismäßig aufwändige Art und Weise die Konzentration im Innenraum des Kraftfahrzeugs bestimmt und der übermäßige CO₂-Anteil beseitigt.

Die DE 197 20 293 C1 beschreibt eine Vorrichtung und ein Verfahren zur schadgasabhängigen Fahrzeuginnenraumbelüftung. Dabei wird, wenn in der Außenluft Schadstoffe festgestellt werden, vom Normalzustand des Frischluftbetriebs auf einen Umluftbetrieb umgeschaltet.

Eine Klimaanlage und ein Verfahren zur Steuerung derselben sind aus der DE 198 50 914 A1 bekannt. Dabei ist im Kühlkreislauf CO₂ als Kältemittel vorgesehen und es befindet sich in Strömungsrichtung hinter dem Wärmetauscher ein CO₂-Sensor, der eventuelle Beschädigungen des Wärmetauschers feststellt und die Luftzufuhr in den Innenraum des Kraftfahrzeugs unterbricht, um die Gesundheit der Insassen nicht zu gefährden.

Es ist Aufgabe der vorliegenden Erfindung, ein Verfahren zum Betreiben einer Klimaanlage in einem Innenraum eines Kraftfahrzeugs zu schaffen, bei welchem die Luftqualität im Innenraum eines Kraftfahrzeuges im Falle des Rauchens verbessert wird. Des Weiteren ist es Aufgabe der Erfindung, eine zur Durchführung dieses Verfahrens geeignete Klimaanlage für ein Kraftfahrzeug zu schaffen.

Erfindungsgemäß wird diese Aufgabe durch die in Anspruch 1 genannten Merkmale hinsichtlich des Verfahrens und durch die Merkmale des Anspruches 5 hinsichtlich der Klimaanlage gelöst.

Die Klimaanlage schaltet bei Überschreiten eines bestimmten CO₂-Grenzwertes, der im Innenraum des Kraftfahrzeugs gemessen wird, in den Frischluftbetrieb um. Die Luftqualität im Innenraum wird gemäß der Erfindung also durch den CO₂-Gehalt der Luft bestimmt und es wird durch das Umschalten in den Frischluftbetrieb ab einem bestimmten Grenzwert sichergestellt, dass der Innenraum stets in ausreichender Weise mit in der Frischluft enthaltenem Sauerstoff versorgt wird. Der CO₂₋Gehalt dient somit als Indikator für die Luftqualität im Innenraum des Kraftfahrzeugs.

Durch das standardmäßige Betreiben der Klimaanlage im Umluftbetrieb wird, insbesondere wenn dem Innenraum kühle Luft zugeführt werden soll, eine erhebliche Energiemenge eingespart, da die umgewälzte Innenluft weitaus weniger stark abgekühlt werden muss als von außen zugeführte, häufig wärmere Frischluft und deshalb der Kompressor der Klimaanlage weniger Energie benötigt. Dieser Vorteil macht sich jedoch auch im Heizbetrieb bemerkbar, da die Innenluft nicht so stark erhitzt werden muss wie von außen zugeführte, kühlere Luft.

Durch die erfindungsgemäße Kopplung des Umschaltens zwischen diesen zwei Betriebsarten der Klimaanlage an den CO₂-Gehalt im Innenraum des Kraftfahrzeugs und den Öffnungsvorgang eines Aschenbechers ist eine sehr viel konstantere Luftqualität erreichbar als bei bisherigen, zeitgesteuerten Umschaltvorgängen. Wenn das Kraftfahrzeugs beispielsweise lediglich mit einer Person besetzt ist, kann die Klimaanlage meist eine erheblich längere Zeit im Umluftbetrieb betrieben werden als dies mit einer Zeitsteuerung der Fall ist, die zumindest von einer durchschnittlichen, wenn nicht sogar maximalen Besetzung des Innenraums ausgehen muss.

Eine Klimaanlage für ein Kraftfahrzeug ist dem unabhängigen Anspruch 5 zu entnehmen. Hierbei ist in dem Innenraum des Kraftfahrzeugs ein CO₂-Sensor angeordnet, der bei Oberschreiten des CO₂-Grenzwertes veranlasst, dass die Steuereinrichtung die Klimaanlage vom Umluftbetrieb auf Frischluftbetrieb umschaltet. Ebenso ist ein Sensor vorgesehen, der den Öffnungsvorgang eines Aschenbechers erkennt und ebenfalls die Unschaltung auf Frischlufbetrieb veranlasst. Mittels dieser erfindungsgemäßen Klimaanlage kann das oben beschriebene erfindungsgemäße Verfahren in einfacher Weise durchgeführt werden.

Vorteilhafte Ausgestaltungen und Weiterbildungen der Erfindung ergeben sich aus den Unteransprüchen sowie aus dem nachfolgend anhand der Zeichnung prinzipmäßig dargestellten Ausführungsbeispiel.

Dabei zeigen:
- Fig. 1: ein Kraftfahrzeug mit einer erfindungsgemäßen Klimaanlage; und
- Fig. 2: eine vergrößerte Darstellung der Klimaanlage aus Fig. 1.

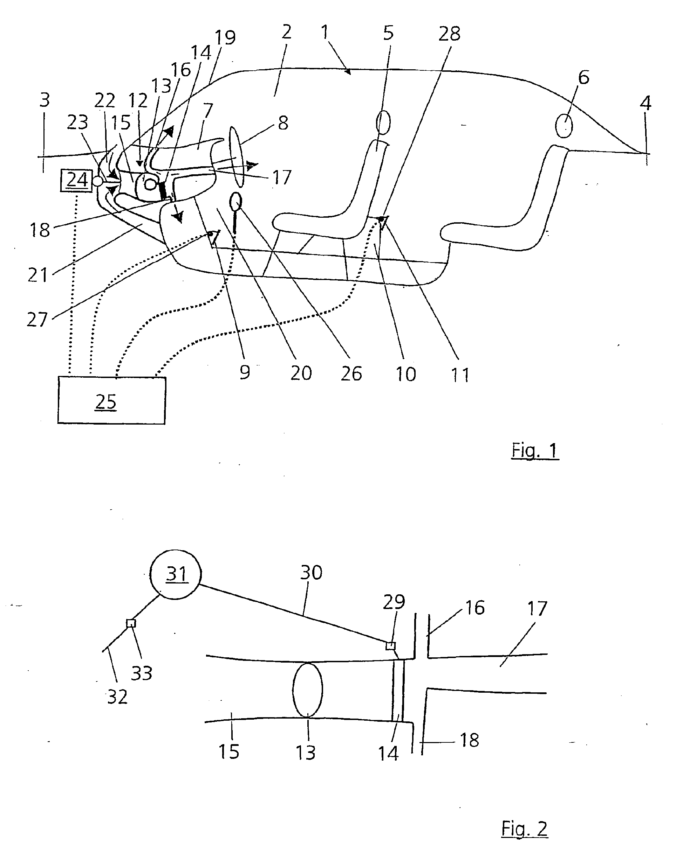

In Fig. 1 ist ein Kraftfahrzeug 1 dargestellt, welches einen Innenraum 2, einen Motorraum 3 und einen Kofferraum 4 aufweist. In dem Innenraum 2 befinden sich in an sich bekannter Weise Vordersitze 5 und Rücksitze 6, von denen jeweils lediglich einer dargestellt ist. Vor dem Vordersitz 5 befinden sich eine Armaturentafel 7 mit einem Lenkrad 8 und einem Aschenbecher 9. An dem Vordersitz 5 ist des weiteren eine Konsole 10 angebracht, in welcher ein von dem Rücksitz 6 aus erreichbarer Aschenbecher 11 untergebracht ist.

In an sich bekannter Weise ist innerhalb der Armaturentafel 7 eine Klimaanlage 12 angeordnet, von welcher in Fig. 2 einzelne Bauteile detaillierter dargestellt sind. So weist die Klimaanlage 12 ein Gebläse 13 auf, dem in der mit den Pfeilen angedeuteten Strömungsrichtung der Luft ein Verdampfer 14 nachgeschaltet ist. Zu dem Gebläse 13 führt eine Zuleitung 15, welche sich nach dem Verdampfer 14 in drei Leitungen 16, 17 und 18 aufteilt. Hiervon führt die erste Leitung 16 zu einer Windschutzscheibe 19 des Kraftfahrzeugs 1, die zweite Leitung 17 führt die Ausgangsluft in Richtung des Lenkrades 8 und die dritte Leitung 18 ist zu einem Fußraum 20, der Teil des Innenraums 2 ist, geöffnet. In nicht dargestellter, jedoch an sich bekannter Weise können die Insassen des Kraftfahrzeugs 1 die Luftführung durch die drei Leitungen 16, 17 und 18 mittels entsprechender Bedienungselemente beeinflussen.

Die Zuleitung 15 zu dem Gebläse 13 wird über eine Umluftleitung 21 aus dem Fußraum 20 und über eine Frischluftleitung 22 versorgt. Wenn das Gebläse 13 lediglich aus der Umluftleitung 21 Luft ansaugt, spricht man von einem Umluftbetrieb, da dem Innenraum 2 dann lediglich umgewälzte Innenluft zugeführt wird. Saugt die Zuleitung 15 jedoch zumindest einen gewissen Teil über die Frischluftleitung 22 an, so wird im vorliegenden Fall von einem Frischluftbetrieb der Klimaanlage 12 gesprochen. Auch im Frischluftbetrieb kann über die Zuleitung 15 also eine gewisse Menge an umgewälzter Innenluft angesaugt werden. Für das Umschalten zwischen der Umluftleitung 21 und der Frischluftleitung 22 und somit zwischen dem Umluftbetrieb und dem Frischluftbetrieb der Klimaanlage 12 ist im vorliegenden Fall ein als Klappe ausgeführtes Steuerorgan 23 vorgesehen, welches von einer als Schrittmotor ausgeführten Verstelleinrichtung 24 stufenlos verstellt werden kann. Standardmäßig wird die Klimaanlage 12 im Umluftbetrieb betrieben, da hierdurch insbesondere beim Zuführen von kühler Luft in den Innenraum 2 eine erhebliche Energiemenge eingespart werden kann. Die Frischluftmenge ist variabel und abhängig von der Stellung des Steuerorgans 23. Alternativ zu der stufenlosen Verstellung ist selbstverständlich auch eine Umschaltung zwischen Umluftbetrieb und Frischluftbetrieb denkbar, bei der jeweils nur entweder die Umluftleitung 21 oder die Frischluftleitung 22 mit der Zuleitung 15 verbunden ist.

Die Steuerung der Klimaanlage 12 wird von einer Steuereinrichtung 25 übernommen, die für gewöhnlich im Motorraum 3 oder in der Armaturentafel 7 angeordnet ist, jedoch aus Platzgründen außerhalb des Kraftfahrzeugs 1 dargestellt wurde. Neben der Verbindung mit der Verstelleinrichtung 24, zu deren Steuerung sie vorgesehen ist, ist die Steuereinrichtung 25 des weiteren mit einem in dem Fußraum 20 des Innenraums 2 angeordnetem CO₂-Sensor 26 verbunden, wobei selbstverständlich auch eine größere Anzahl an CO₂-Sensoren 26 vorgesehen sein kann. Der CO₂-Sensor 26 misst den CO₂-Gehalt in dem Innenraum 2 des Kraftfahrzeugs 1 und gibt bei Überschreiten eines bestimmten, voreingestellten CO₂-Grenzwertes in dem Innenraum 2 ein Signal an die Steuereinrichtung 25, so dass diese vom zuvor eingenommenen Umluftbetrieb auf Frischluftbetrieb umschaltet. Hierzu muss lediglich das Steuerorgan 23 mittels der Verstelleinrichtung 24 von der Frischluftleitung 22 in Richtung der Umluftleitung 21 bewegt werden. Auf diese Weise ist die Betriebsart der Klimaanlage 12 vom CO₂-Gehalt im Innenraum 2 des Kraftfahrzeugs 1 abhängig und es ist gewährleistet, dass die Insassen im Falle des Überschreitens des voreingestellten CO₂-Grenzwertes mit Frischluft versorgt werden. Es hat sich als besonders geeignet herausgestellt, wenn dieser CO₂-Grenzwert ca. 800 ppm beträgt. Selbstverständlich ist der CO₂-Sensor 26 bzw. die Steuereinrichtung 25 auch auf andere CO₂-Grenzwerte einstellbar, wenn dies sinnvoll oder erforderlich ist. Gegebenenfalls kann im Zusammenhang mit dem Umschalten zwischen Umluftbetrieb und Frischluftbetrieb auch die Qualität bzw. Zusammensetzung der Außenluft berücksichtigt werden.

Die Steuereinrichtung 25 ist des weiteren mit zwei Sensoren 27 und 28 verbunden, welche den Aschenbechern 9 und 11 zugeordnet sind. Sobald der entsprechende Aschenbecher 9 bzw. 11 geöffnet wird, wird dies von dem Sensor 27 bzw. 28 detektiert und an die Steuereinrichtung 25 weitergegeben, die anschlie-βend über die Verstelleinrichtung 24 und das Steuerorgan 23 die Klimaanlage 12 wie oben beschrieben in den Frischluftbetrieb umschaltet. Eine solche zusätzliche Steuerung des Umschaltens der Klimaanlage 12 von Umluftbetrieb in Frischluftbetrieb über die Aschenbecher 9 und 11 ist sinnvoll, da beim Rauchen erhöhte Mengen an CO, NOₓ usw. entstehen und daher ein früheres Umschalten in den Frischluftbetrieb wünschenswert ist. Selbstverständlich können in diesem Zusammenhang auch weitere Aschenbecher mit entsprechenden Sensoren vorgesehen sein. Zusätzlich oder alternativ zu den Sensoren 27 und 28, die das Öffnen der Aschenbecher 9 und 11 detektieren, können im Innenraum 2 auch andere Sensoren angeordnet sein, mit welchen feststellbar ist, wenn in dem Innenraum 2 des Kraftfahrzeugs 1 geraucht wird. Es kann sinnvoll sein, vollständig auf Frischluftbetrieb umzuschalten, wenn einer der Sensoren 27 oder 28 anspricht. Die Sensoren 27 und 28 können selbstverständlich auch unabhängig von dem durch den CO₂₋Sensor 26 gemessenen CO₂-Gehalt ansprechen und die Klimaanlage 12 in den Frischluftbetrieb umschalten.

Bei dem beschriebenen Verfahren zum Betreiben der Klimaanlage 12 kann des weiteren vorgesehen sein, dass beim Umschalten in den Frischluftbetrieb die Frischluft hauptsächlich über die dritte Leitung 18 in den Fußraum 20 geleitet wird. Da CO₂ schwerer ist als Raumluft, sammelt sich das CO₂ hauptsächlich im unteren Bereich des Innenraums 2 an und wird durch die eingeleitete Frischluft schneller aus dem Innenraum 2 gefördert, beispielsweise über nicht dargestellte Öffnungen vom Innenraum 2 in den Kofferraum 4.

Alternativ ist es denkbar, da CO₂ schwerer ist als die Raumluft, die Frischluft über die Leitungen 16 und/oder 17 so gezielt zu leiten, dass sie in den Gesichtsbereich geblasen wird, ohne sich mit dem CO₂ im Fußraum 20 zu mischen.

Der CO₂-Sensor 26 ist auch dann sehr wirkungsvoll und es kann auf andere Sensoren verzichtet werden, wenn als Kältemittel für den Verdampfer 14 CO₂ vorgesehen ist. Dann kann nämlich eine eventuelle Leckage des Verdampfers 14 sehr schnell detektiert und die Klimaanlage 12 abgeschaltet werden und das Gebläse 13 nach Umschaltung des Steuerorgans 24 auf Frischluftbetrieb, evtl. auf eine erhöhte bzw. maximale Gebläsestufe geschaltet werden, so dass eine Sicherheitseinrichtung für die Insassen aus dem CO₂-Sensor 26, der Steuereinrichtung 25 und dem Steuerorgan 23 gegeben ist. Um dieses Abschalten der Klimaanlage 12 zu erreichen, kann, wie in Fig. 2 dargestellt, der Verdampfer 14 druckseitig mit einem Expansionsventil 29 versehen sein, das den Verdampfer 14 vom Kreislauf trennt, und das sperrt, wenn der CO₂-Sensor 26 eine CO₂-Leckage detektiert oder wenn der CO₂-Sensor 26, bzw. sein Steuersignal ausfällt, z.B. bei einem Unfall. In Fig. 2 ist des weiteren ein über eine Leitung 30 mit dem Verdampfer 14 verbundener Kompressor 31 dargestellt, in dessen Zuleitung 32 ein saugseitiges Ventil 33 angeordnet ist. Dieses Ventil 33 dient dazu, in eventuellen Fällen der Leckage des Verdampfers 14 den Kompressor 31 abzuschalten.

## Patentansprüche

1. Verfahren zum Betrieben einer Klimaanlage in einem Innenraum eines Kraftfahrzeugs, wobei die Klimaanlage in einem Umluftbetrieb, in dem dem Innenraum umgewälzte Innenluft zugeführt wird, oder in einem Frischluftbetrieb, in dem dem Innenraum zumindest ein Anteil an Frischluft zugeführt wird, betrieben werden kann, und wobei die Klimaanlage in ihrem Normalzustand in dem Umluftbetrieb betrieben wird, wobei die Klimaanlage (12) bei Überschreiten eines bestimmten, in dem Innenraum (2) des Kraftfahrzeugs (1) gemessenen CO₂-Grenzwertes in den Frischluftbetrieb umgeschaltet wird,
**dadurch gekennzeichnet,**
**dass** beim Öffnen eines in dem Innenraum (2) des Kraftfahrzeugs (1) sich befindlichen Aschenbechers (9, 11) die Klimaanlage (12) in den Frischluftbetrieb
umgeschaltet wird.

2. Verfahren nach Anspruch 1,
**dadurch gekennzeichnet,**
**dass** die Klimaanlage (12) mit CO₂ als Kältemittel
betrieben wird.

3. Verfahren nach Anspruch 1 oder 2,
**dadurch gekennzeichnet,**
**dass** der CO₂-Grenzwert 800 ppm beträgt.

4. Verfahren nach einem der Ansprüche 1 bis 3,
**dadurch gekennzeichnet,**
**dass** beim Umschalten in den Frischluftbetrieb die Frischluft in einen Fußraum (20) des Kraftfahrzeugs (1) geleitet wird.

5. Klimaanlage für ein Kraftfahrzeug, welche zwischen einem Umluftbetrieb, in dem einem Innenraum des Kraftfahrzeugs umgewälzte Innenluft zugeführt wird, und einem Frischluftbetrieb, in dem dem Innenraum zumindest ein Anteil an Frischluft zugeführt wird, umschaltbar ist, und welche einen Kompressor, einen Verdampfer und eine Steuereinrichtung aufweist, wobei in dem Innenraum (2) des Kraftfahrzeugs (1) wenigstens ein CO₂-Sensor (26) angeordnet ist, welcher bei Überschreiten eines CO₂₋Grenzwertes in dem Innenraum (2) des Kraftfahrzeugs (1) ein Signal an die Steuereinrichtung (25) zum Umschalten der Klimaanlage (12) von Umluftbetrieb auf Frischluftbetrieb gibt,
**dadurch gekennzeichnet,**
**dass** in dem Innenraum (2) des Kraftfahrzeugs (1) wenigstens ein Sensor (27,28) angeordnet ist, mit welchem feststellbar ist, wenn in dem Innenraum (2) des Kraftfahrzeugs (1) geraucht wird, wobei der wenigstens eine Sensor (27,28) so ausgebildet ist, dass er das Öffnen eines Aschenbechers (9,11) detektiert.

6. Klimaanlage nach Anspruch 5,
**dadurch gekennzeichnet,**
**dass** der CO₂-Sensor (26) in einem Fußraum (20) des Kraftfahrzeugs (1) angeordnet ist.

7. Klimaanlage nach Anspruch 5 oder 6,
**dadurch gekennzeichnet,**
**dass** die Steuereinrichtung (25) in Wirkverbindung mit einer Verstelleinrichtung (24) steht, welche zum Verstellen eines zwischen Umluftbetrieb und Frischluftbetrieb umschaltenden Steuerorgans (23) vorgesehen ist.

8. Klimaanlage nach einem der Ansprüche 5 bis 7,
**dadurch gekennzeichnet,**
**dass** als Kältemittel für den Verdampfer (14) CO₂ vorgesehen ist.

9. Klimaanlage nach einem der Ansprüche 5 bis 8,
**dadurch gekennzeichnet**,
der Verdampfer (14) mit einem Expansionsventil (29) zum Abschalten des Verdampfers (14) versehen ist.

10. Klimaanlage nach einem der Ansprüche 5 bis 9,
**dadurch gekennzeichnet**,
der Kompressor (31) saugseitig mit einem Ventil (33) zum Abschalten des Kompressors (14) versehen ist.

## Claims

1. A process for operating an air conditioning system in an interior of a motor vehicle, it being possible to operate said air conditioning system either in a recirculating air mode in which recirculated interior air is supplied to the interior or in a fresh air mode in which at least a proportion of fresh air is supplied to the interior and the air conditioning system normally being operated in recirculated air mode, the air conditioning system (12) being switched to fresh air mode when the CO₂ level measured in the interior (2) of the motor vehicle (1) falls below a specific CO₂ limit value,
**characterised in that**
when an ashtray (9, 11) located in the interior (2) of the motor vehicle (1) is opened the air conditioning system (12) is switched to fresh air mode.

2. A process in accordance with claim 1,
**characterised in that**
the air conditioning system (12) is operated using CO₂ as the coolant.

3. A process in accordance with claim 1 or 2,
**characterised in that**
the CO₂ limit value is 800 ppm.

4. A process in accordance with one of claims 1 to 3,
**characterised in that**
when the air conditioning system (12) is switched to fresh air mode the fresh air is fed into a footwell (20) in the motor vehicle (1).

5. An air conditioning system for a motor vehicle which can be switched between a recirculating air mode in which recirculated interior air is supplied to the interior of the motor vehicle and a fresh air mode in which at least a proportion of fresh air is supplied to the interior, and which has a compressor, an evaporator and a control device, there being positioned in the interior (2) of the motor vehicle (1) at least one CO₂ sensor (26) which sends the control device (25) a signal to switch the air conditioning system (12) from recirculating air mode to fresh air mode when the CO₂ level measured in the interior (2) of the motor vehicle (1) falls below a specific CO₂ limit value,
**characterised in that**
positioned in the interior (2) of the motor vehicle (1) is at least one sensor (27, 28) with which it is possible to determine if someone is smoking in the interior (2) of the motor vehicle, the at least one sensor (27, 28) being designed such that it detects the opening of an ashtray (9, 11).

6. An air conditioning system in accordance with claim 5,
**characterised in that**
the CO₂ sensor (26) is positioned in a footwell (20) Of the motor vehicle (1).

7. An air conditioning system in accordance with claim 5 or 6,
**characterised in that**
the control device (25) is connected actively with an adjustment device (24) which is provided to adjust a control organ (23) which switches between recirculating air mode and fresh air mode.

8. An air conditioning system in accordance with one of claims 5 to 7,
**characterised in that**
CO₂ is provided as the coolant for the evaporator (14).

9. An air conditioning system in accordance with one of claims 5 to 8,
**characterised in that**
the evaporator (14) is provided with an expansion valve (29) for switching off the evaporator (14).

10. An air conditioning system in accordance with one of claims 5 to 9,
**characterised in that**
the compressor (31) is provided with a valve (33) on the intake side for switching off the compressor (31)

## Revendications

1. Procédé pour faire fonctionner un système de climatisation dans l'habitacle d'un véhicule automobile, où le système de climatisation peut être actionné dans un mode fonctionnant avec de l'air ambiant, au cours duquel de l'air intérieur recyclé est fourni à l'habitacle, ou bien dans un mode fonctionnant avec de l'air frais, au cours duquel au moins un apport d'air frais est fourni à l'habitacle, et où le système de climatisation, dans son état normal, est actionné dans le mode fonctionnant avec de l'air ambiant, où le système de climatisation (12), dans le cas d'un dépassement d'une valeur limite supérieure déterminée de CO₂, mesurée dans l'habitacle (2) du véhicule automobile (1), est inversé, passant dans le mode fonctionnant avec de l'air frais,
**caractérisé en ce que**, lors de l'ouverture d'un cendrier (9, 11) se trouvant dans l'habitacle (2) du véhicule automobile (1), le système de climatisation (12) est inversé, passant dans le mode fonctionnant avec de l'air frais.

2. Procédé selon la revendication 1, **caractérisé en ce que** le système de climatisation (12) est actionné avec du CO₂ servant de fluide frigorigène.

3. Procédé selon la revendication 1 ou 2, **caractérisé en ce que** la valeur limite de CO₂ est égale à 800 ppm.

4. Procédé selon l'une quelconque des revendications 1 à 3, **caractérisé en ce que**, lors de l'inversion pour passer dans le mode fonctionnant avec de l'air frais, l'air frais est dirigé dans un espace (20) prévu pour les pieds des occupants du véhicule automobile (1).

5. Système de climatisation pour un véhicule automobile, qui peut être inversé entre un mode fonctionnant avec de l'air ambiant, au cours duquel de l'air intérieur recyclé est fourni à un habitacle du véhicule automobile, et un mode fonctionnant avec de l'air frais, au cours duquel au moins un apport d'air frais est fourni à l'habitacle, système de climatisation qui présente un compresseur, un évaporateur et un dispositif de commande, où au moins un capteur (26) de CO₂ est disposé dans l'habitacle (2) du véhicule automobile (1), capteur qui, lors d'un dépassement d'une valeur limite supérieure de CO₂, dans l'habitacle (2) du véhicule automobile (1), fournit un signal au dispositif de commande (25), pour l'inversion du système de climatisation (12) passant du mode fonctionnant avec de l'air ambiant, au mode fonctionnant avec de l'air frais,
**caractérisé en ce qu'**au moins un capteur (27, 28) est disposé dans l'habitacle (2) du véhicule automobile (1), capteur avec lequel on peut constater que l'on fume dans l'habitacle (2) du véhicule automobile (1), où le capteur (27, 28), au moins au nombre de un, est conçu de manière telle, qu'il détecte l'ouverture d'un cendrier (9, 11).

6. Système de climatisation selon la revendication 5, **caractérisé en ce que** le capteur (26) de CO₂ est disposé dans un espace (20) prévu pour les pieds des occupants du véhicule automobile (1).

7. Système de climatisation selon la revendication 5 ou 6, **caractérisé en ce que** le dispositif de commande (25) est en liaison active avec un dispositif de réglage (24) qui est prévu pour le réglage d'un organe de commande (23) s'inversant entre le mode fonctionnant avec de l'air ambiant, et le mode fonctionnant avec de l'air frais.

8. Système de climatisation selon l'une quelconque des revendications 5 à 7, **caractérisé en ce que** du CO₂ est prévu comme fluide frigorigène pour l'évaporateur (14).

9. Système de climatisation selon l'une quelconque des revendications 5 à 8, **caractérisé en ce que** l'évaporateur (14) est doté d'un détendeur (29) servant à l'arrêt de l'évaporateur (14).

10. Système de climatisation selon l'une quelconque des revendications 5 à 9, **caractérisé en ce que** le compresseur (31) est doté, côté aspiration, d'une vanne (33) servant à l'arrêt du compresseur (14).
